# EUROPEAN PATENT APPLICATION

(11) **EP 3 595 108 A1**
(43) Date of publication of application: **15.01.2020**
(21) Application number: 19175964.6
(22) Date of filing: 22.05.2019
(51) Int. Cl.: H02G 7/05, H02G 7/02

(54) **ANCHOR CLAMPING DEVICE FOR TENSIONING WIRES**

(30) Priority: 11.07.2018 IT 201800007099
(71) Applicant: A. SALVI & C. S.R.L., 20157 Milano (IT)
(72) Inventor: PASINO, Roberto, 20158 Milano (IT); PIAZZOLA, Andrea, 20158 Milano (IT)
(74) Representative: Faggioni, Carlo Maria

(57) **Abstract**

A wedge-shaped clamping device for anchoring a wire is described, comprising
a wedge-shaped unit (2) provided with two wedge-shaped tapered elements (2a, 2b) mutually coupled and provided with opposite seats (6a, 6b),
a shell body (4) provided with inner wedging surfaces and configured to house said wedge-shaped unit (2), and
a pair of constraining brackets (5a, 5b) coupled with pivot pins (19a, 19b) fixed to and within said shell body (4),
wherein said shell body (4) is comprised of two mutually coupled half-shells (4a, 4b), and in that
said half-shells (4a, 4b) have an inner recess (18a, 18b), which extends on a side wall up to an edge which defines a back mouth, from which said pivot pin (19a, 19b) projects perpendicularly, said pin being integrally formed with said half-shells (4a, 4b), and
said constraining brackets (5a, 5b) have a flat portion provided with a coupling hole (5'a, 5'b) engaged with said pivot pins (19a, 19b), of a thickness equal to or smaller than a depth of said inner recess (18a, 18b).

## Description

### FIELD OF THE INVENTION

The present invention relates to a terminal tool for retaining wires, in particular a wedge-shaped clamp, also known as a anchor clamp, for wires of overhead power lines.

### TECHNICAL BACKGROUND

The transmission and distribution of electrical power is managed through a primary electricity network consisting of a set of network infrastructures used to transport electrical energy. Transportation is carried out by underground power lines and overhead power lines.

The overhead power line comprises a set of towers connected by conductors for delivering electric current, forming part of the very high-voltage and high-voltage VHV-HV crossing network (380 kV, 200 kV, 132 kV) and high (132 kV), medium (15 kV) and low (380-220 V) voltage distribution networks (HV, MV and LV respectively). The electric alternate current at the frequency of 50 Hz, at least in Italy, is delivered in medium and in low power through special transformation cabins.

For the type of connection of the wires to the support, the towers are distinguished in suspension supports and anchoring supports. The suspension supports are used when the conductor passes uninterruptedly from one span to the other and therefore they do not support tension imbalances but vertically support the conductor; while the anchoring supports have the function of mechanical disconnectors of the electric cables and therefore support the tension of a section of the whole line, wherein the suspended conductors are supported and mechanically tensioned by appropriate insulators fixed to the brackets of the same supports.

The anchoring towers are located at the outputs of the power line stations and along the line itself and have insulators with horizontal attitude having to support the tension of various spans. Thereby, suitable fastenings are used for the terminal harness of an HV or MV line to the dead-end tower, useful for laying, tensioning and adjusting the conductors and guard wires.

Terminal anchor clamps are used in correspondence of the fastenings. Such terminal anchor clamps, such as for example the compression clamps, the screwed clamps and the anchor clamps of the modular wedge-shaped type, have proved advantageous for a number of reasons, in particular for their installation.

A typical wedge-shaped anchor clamp of the prior art is described in EP1255339 - on which basis the preamble part of the appended main claim is defined - wherein the wedge-shaped device has no fastening elements such as screws and bolts. It generally comprises a wedge-shaped structure, composed of two symmetrical elements able to clamp the electric wire between them: these two wedge-shaped elements are clamped one on the other by the axial action exerted by two outer half-shells to which is bound a pair of retaining brackets. The latter are coupled externally to the two half-shells by means of separate pins, attached and locked in suitable slots. The brackets, through their respective pins, are free to pivot a few degrees, so as to dampen any share stresses applied to the structure. Therefore, the arrangement offers the advantage of a well-attached assembly around the electric wire, with high resistance to the tension stress and minimum use of components.

However, this conventional wedge-shaped clamp has some drawbacks. First of all, the installation of the constrain pins requires precision drilling on the half-shells, which structurally weakens the device in one of the most stressed areas and requires machining operations to prepare the seats in the forged half-shells and to lock the pins in their seat. Furthermore, the pins protrude laterally and offer an unwanted encumbrance that could cause electrical problems on very high voltage lines. Finally, the brackets must be locked on the pins, for example by means of holding rings or keys, to avoid unintentional decoupling.

The need is thus felt for having a wedge-shaped anchor clamp which overcomes the drawbacks of the prior art, in particular a simplified clamp, which requires a smaller number of parts less affected by machining operations.

Other wedge-shaped clamps of the prior art are described in AT384867, FR2344157, US6076236. Also, these solutions have usage restrictions and are complex to manufacture and assemble.

### SUMMARY OF THE INVENTION

The object of the present invention is therefore to provide a system that solves the aforementioned problems and still allows easy assembly and installation. In particular, it is desired to provide a clamp that is economical from a constructive and maintenance point of view, has a simple assembly mechanism and at the same time a high structural strength.

A solution according to the invention is achieved by means of a structural arrangement of an anchor clamp having the features defined in claim 1. Other preferred features of the invention are defined in the dependent claims.

### BRIEF DESCRIPTION OF THE DRAWINGS

Further features and advantages of the invention will anyhow be more evident from the following detailed description of a preferred embodiment, given by mere way of nonlimiting example and illustrated in the accompanying drawings, wherein:
Fig. 1 is a perspective view of a complete clamping device according to the invention;
Fig. 2 is a side elevation view of the device of Fig. 1;

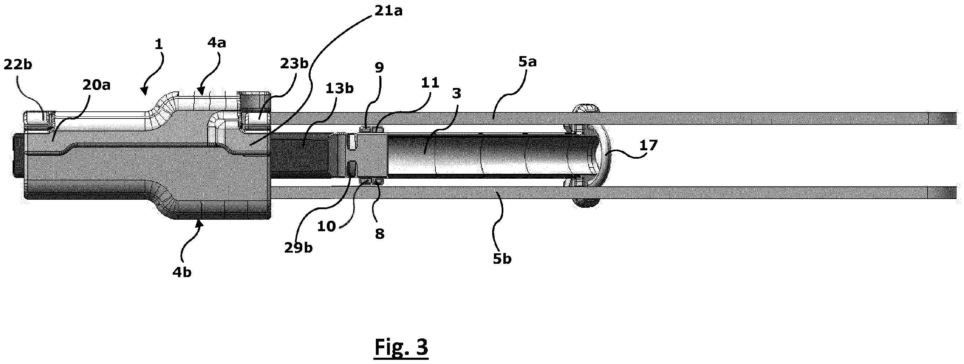

Fig. 3 is a top plan view of the device of Fig. 1;

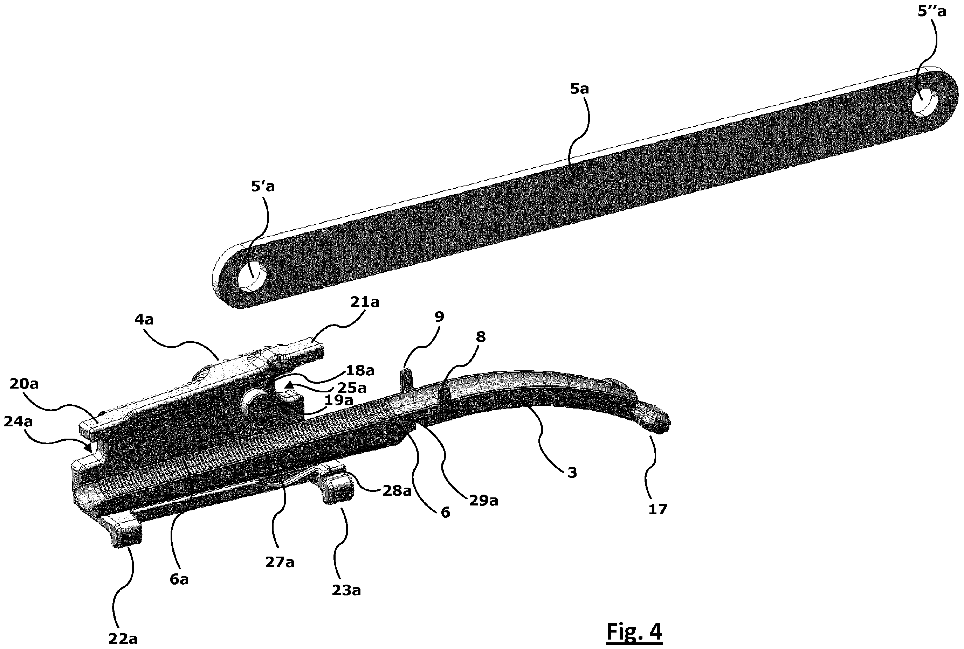

Fig. 4 is an exploded perspective view, with removed parts, of the device of Fig. 1, showing a lower wedge element of the device, a half-shell and a bracket;

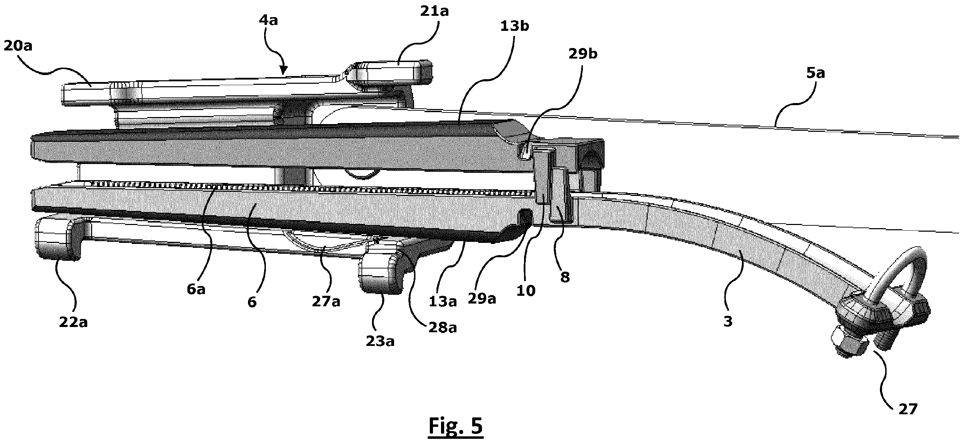

Fig. 5 is a perspective view of the device of Fig. 1, with removed parts, showing a half-shell, a bracket and the two coupled wedge elements;
Figs. 6A and 6B are perspective views with removed parts, of the device of Fig. 1, showing the two coupled wedge elements;
Figs. 7A and 7B are perspective views of the device of Fig. 1, in an assembly step and with the coupled half-shells, respectively;
Figs. 8A and 8B are rear elevation views of the half-shells of the device of Fig. 1, in two different assembly steps;

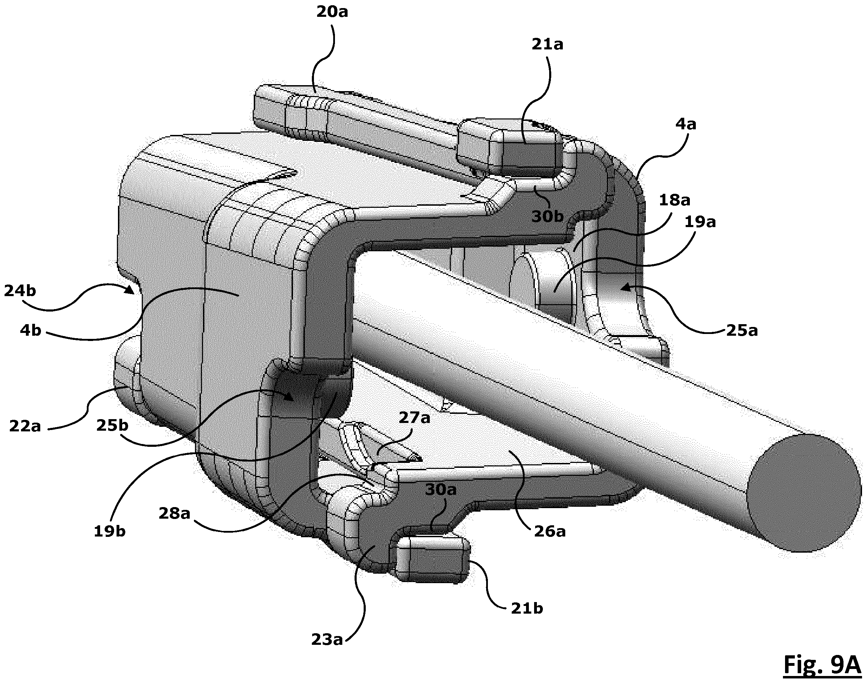

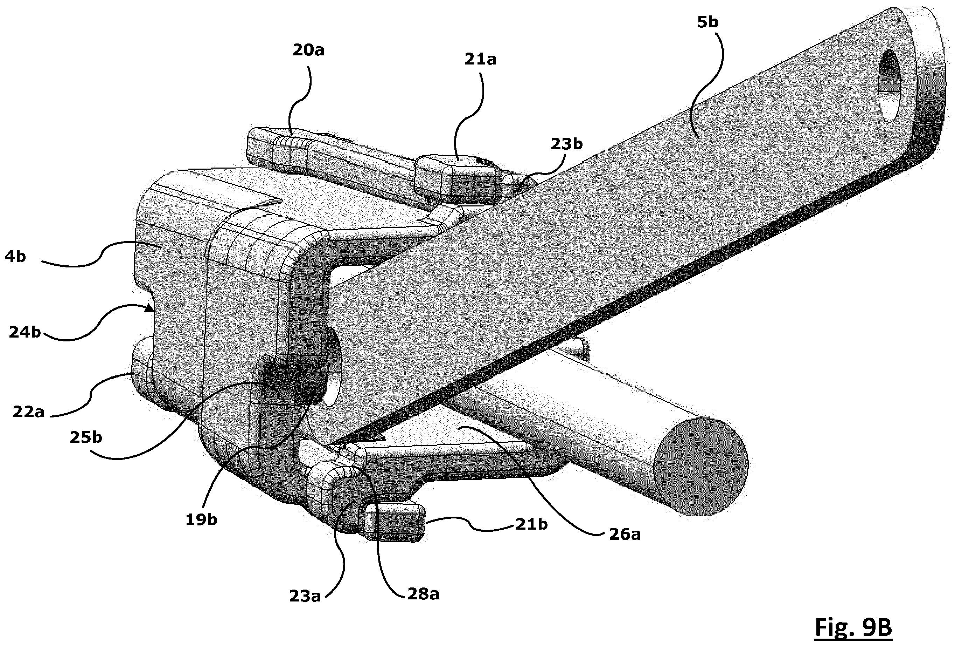

Figs. 9A and 9B are perspective views of the coupled half-shells of the device of Fig. 1, which show the initial step of introduction of the bracket;

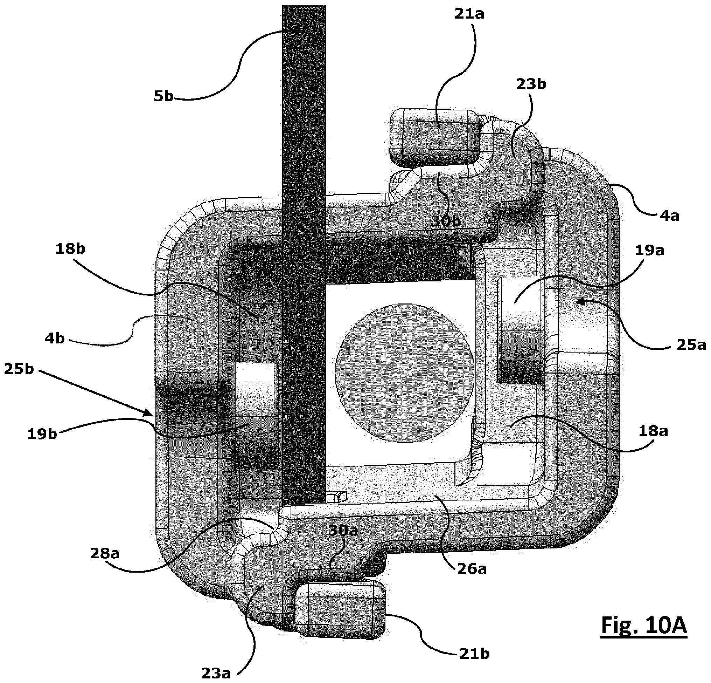

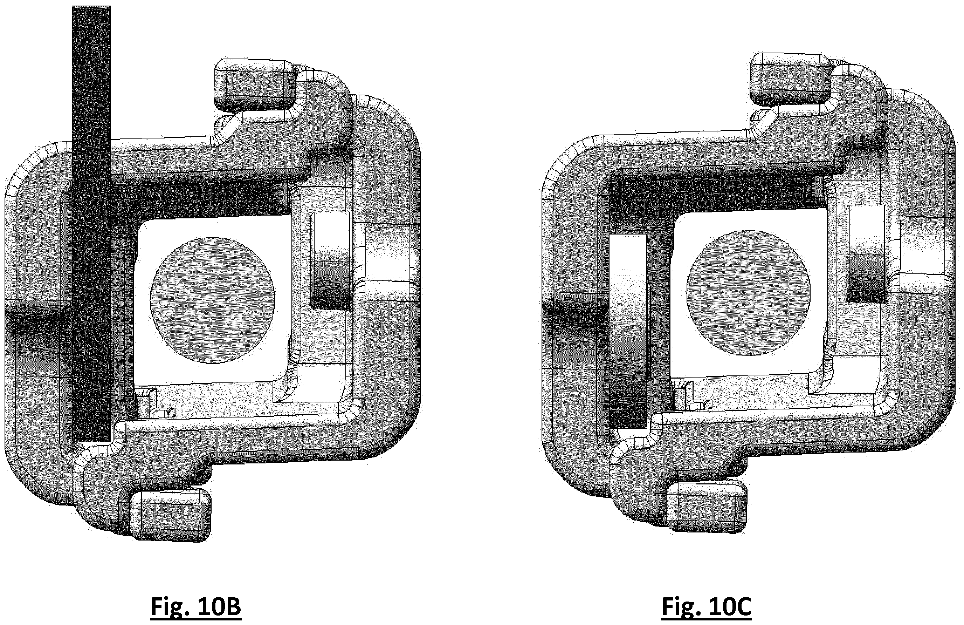

Figs. 10A, 10B and 10C are rear perspective views of the coupled half-shells of the device of Fig. 1, which show the different bracket introduction steps and connection steps with the respective pivot pin; and

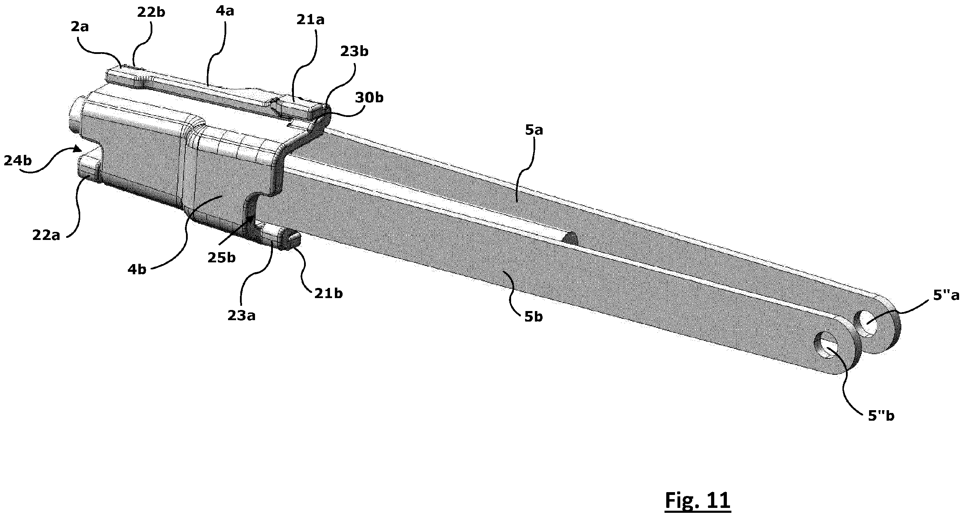

Fig. 11 is a perspective view of the device of Fig. 1, with removed parts, showing the brackets coupled to the shell of the device.

### DETAILED DESCRIPTION OF THE PREFERRED EMBODIMENT

In the following disclosure, an anchor device will be described with reference to its typical attitude in use; the upper/lower or front/back expressions therefore refer to this attitude, as shown in the drawings, but it is understood that the device can also have different attitude during its handling.

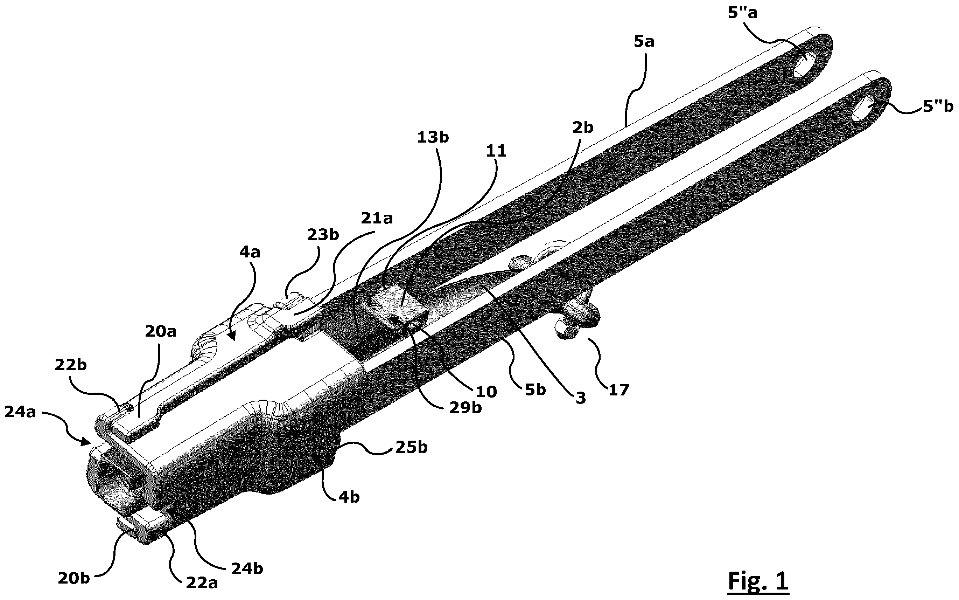

A terminal anchor device 1 - as clearly shown in Fig. 1 - of a power line is comprised, in a manner known per se, of a wedge-shaped arrangement 2, partly housed inside a shell body 4, and a pair of brackets 5.

The pair of brackets 5 is adapted to constrain the anchor device to an anchor tower or to other constraining structure.

The wedge-shaped unit or arrangement 2 is intended to clamp a wire (for example an electric wire or a stranded rope) and is provided with a tab projection 3 which accompanies a section of the wire.

The wedge-shaped unit 2 is housed inside the shell body 4 and is comprised of two elongated elements 2a and 2b provided with external sliding surfaces 13a and 13b wedge-shaped tapered in the longitudinal direction.

The two symmetrical elements 2a and 2b comprise an inner surface specially shaped to house the wire along its longitudinal axis, for example with a section in the form of a seat 6a and 6b of semi-circular section. The surface of the seats 6a and 6b preferably has a specific knurling to create greater friction and produce a better retention in the longitudinal direction of the electric wire.

One of the two wedge-shaped elements 2a projects from the rear back, i.e. the end opposite to the tapering direction, with a curved tab element 3 able to accompany and guide the wire on a curved path which progressively moves away from the longitudinal axis of the device. The wire is preferably retained on this curved tab 3 by a U-shaped retaining clamp 17.

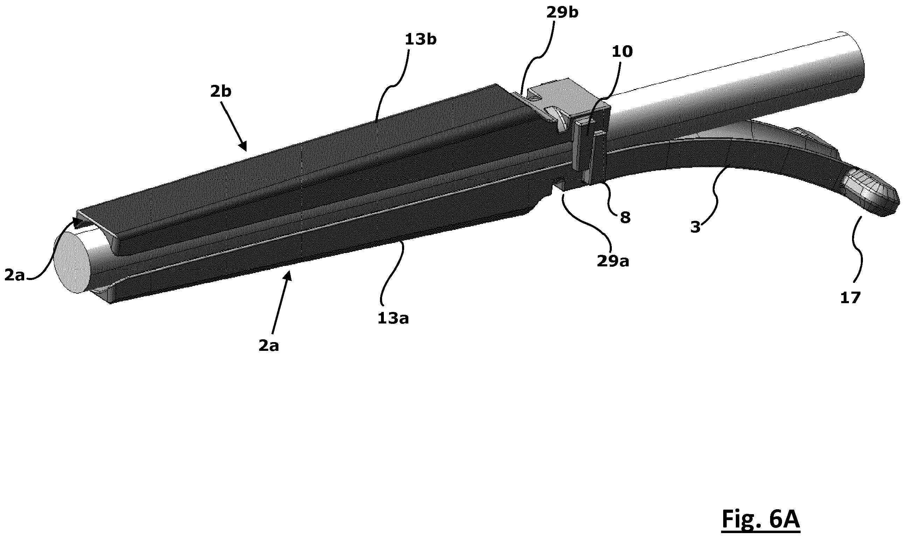

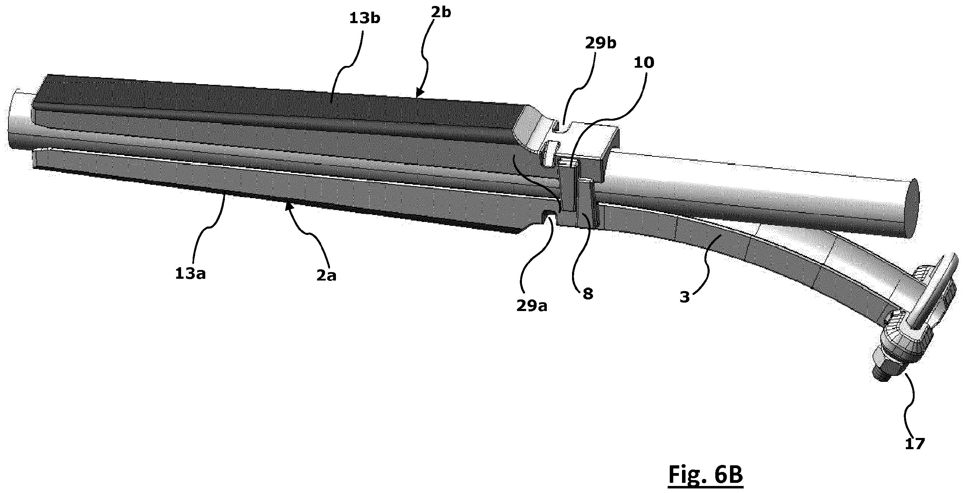

On the lateral sides of the wedge-shaped elements 2a and 2b, in a portion intended to remain external to the housing shell 4, preferably in the proximity of a back end, two pairs of coupling teeth 8, 9 and 10, 11 are provided each pair attached to one of the two wedge elements. As well shown in the figures, the coupling teeth 8, 9 and 10, 11 are wedge-shaped tapered, with a longitudinal axis crosswise to the longitudinal axis of the wedge-shaped unit 2. The tapered surface of each of the teeth is directed towards the opposite wedge element 2a or 2b, whereby upwards (with reference to Figs. 6A, 6B) in the lower element 2a and downwards in the upper element 2b. The teeth 8, 9 and 10, 11 arranged on the two opposite sides of the same wedge element 2a or 2b, are offset from each other longitudinally by the same extent or pitch but in opposite direction; therefore, since the two wedge-shaped elements 2a and 2b are identical, when they are superimposed and coupled together in a crosswise direction with the seats 6a and 6b facing each other in a mirror-like manner, the teeth end up engaging with each other in a closing/opening bite movement, meshing two by two and thus preventing a longitudinal translation of the two wedge-shaped elements 2a and 2b between each other.

The teeth 8, 9 and 10, 11 are therefore suitable to allow a reciprocal crosswise approach between the two wedge elements 2a and 2b, but do not allow a longitudinal relative movement thereof.

A circumferential groove 29 is preferably arranged on the outer surface of the wedge elements 2a and 2b in the proximity of the coupling teeth 8, 9 and 10, 11. This groove 29, possibly interrupted as shown in Figs. 6A and 6B, can house a temporary retaining strap, applied in the assembly step to maintain the mutual abutment of the two wedge elements 2a and 2b together, until they are introduced into the respective housing half-shells 4.

With the exception of the rough textured inner surface 6a and 6b of the seats 6, the entire outer surface of the two elements 2a and 2b is preferably smooth, to reduce the friction coefficient with respect to the housing shell 4, which facilitates its operation. To favour this aspect, the opposed external sliding surfaces 13a and 13b can be coated with low friction material.

The wedge-shaped unit 2 is intended to be functionally housed within a shell body 4.

The latter is generally shaped as a square pyramidal frustum and is composed of two complementary and mutually coupled half-shells 4a and 4b, which extend for a length equal to a significant portion of the wedge-shaped unit 2, along which it is necessary to exert the retention action on the wire.

The internal cavity of the shell body 4 is arranged so as to surround the wedge elements 2a and 2b: hence it defines an interior housing surface which mates the tapered perimeter of the wedge elements 2a and 2b.

In particular, the two half-shells 4a and 4b are identical and each one includes a side wall and a wedging wall, mutually orthogonal, from which engaging elements depart for mutual engagement. The inner surface of the wedging walls acts as a guide for the sliding surfaces 13a and 13b of the wedge-shaped elements 2a and 2b. The side walls act as lateral containment instead.

According to the invention, each half-shell 4a, 4b is obtained as a single moulded or forged piece, without the need to carry out mechanical machining thereafter. Moreover, the inner surface of the side wall of each half-shell 4a and 4b has a lowered or recessed area, respectively 18a and 18b, from which a protruding pin 19a and 19b, obtained integrally in the half-shell, projects in a direction transversal to the longitudinal axis of the half-shell and therefore of the device. The depth of the recesses is greater than the thickness of the bracket plates 5a and 5b. The pins 19a and 19b extend for a length slightly smaller than the depth of the recesses 18a and 18b, but in any case, greater than the thickness of the brackets 5a and 5b.

The recesses 18a, 18b extend rearwardly up to an edge which constitutes the rear mouth of the shell body 4, defining insertion pockets for the brackets 5 (as will be seen later).

The engagement elements for the mutual engagement of the half-shells 4a and 4b are represented by two different orders of coupling teeth: for each half-shell there are provided two engaging teeth with longitudinal extension 20a and 21a and two engaging teeth with crosswise extension 22a and 23a.

The engaging teeth with longitudinal extension 20a and 21a have an L-shaped design and extend along an axis parallel to the longitudinal axis of the device. The engaging teeth with crosswise extension 22a and 23a have an L-shaped design and extend along an axis perpendicular to the longitudinal axis of the device.

The engaging teeth project from the side walls and wedging walls of the half-shells 4a and 4b, extending from the respective edges.

Moreover, while the two teeth 20a and 21a with longitudinal extension extend in opposite directions, one 20a towards the front end and the other 21a towards the back end, the two teeth 22a and 23a with crosswise extension are both directed towards the outside of the half-shell, extending to ninety degrees (90°) with respect to the wedging wall.

Preferably, the back teeth with longitudinal extension 21a and 21b are provided at a higher level than the lying plane of the respective front teeth 20a, 20b; correspondingly, the abutment plane defined by the respective back teeth with crosswise extension 23b, 23a is at a higher level than the homologues front teeth 22a and 22b. This height offset allows to widen the internal compartment of the half-shells in the back area, that is, in correspondence with the recesses 18a and 18b for the assembly function which will be illustrated below.

Furthermore, both in the front mouth area and in the back mouth area, in correspondence with the engaging teeth with longitudinal extension, the half-shells 4a and 4b have respective cut-outs 24a, 25a, 24b, 25b in the side wall, having a height and a width suitable for introducing the engaging teeth with crosswise extension of the complementary half-shell.

The cut-outs 24a, 25a, 24b, 25b serve to define a manoeuvring space, useful in the coupling step between the two half-shells 4a and 4b, to mutually approach without interference the complementary engaging teeth - each tooth with longitudinal extension 20a, 21a of a half-shell 4a engages with the corresponding teeth with crosswise extension 22b, 23b of the other half-shell 4b - and then engaging them by sliding movements.

The device is also provided with a pair of constraining brackets 5a, 5b, provided with at least one pivot hole 5'a and 5'b at one end, intended to hinge on the respective pins 19a and 19b of the half-shells 4, and one constraining opening 5' 'a, 5"b at the other end, for retaining a joint (not shown) of the anchor tower.

The brackets 5a and 5b have a thickness, at least in the portion intended to engage with the shell body 4, such as to remain completely inside the recess 18a, 18b on the side wall of the half-shells 4a and 4b, so as to terminate flush with the ends of the pins 19a, 19b and constitute a lateral delimiting surface of the two wedge-shaped elements 2a and 2b. The sizing of the half-shells 4a and 4b and the wedge-shaped elements 2a and 2b is preferably such that the brackets 5a and 5b, once engaged with the respective pins 19a and 19b, are completely accomodated in the recesses 18a, 18b of the walls.

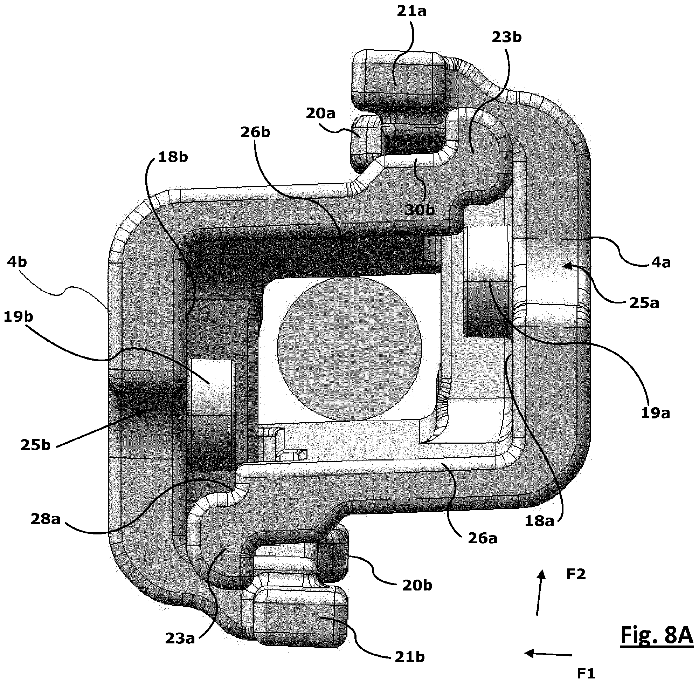

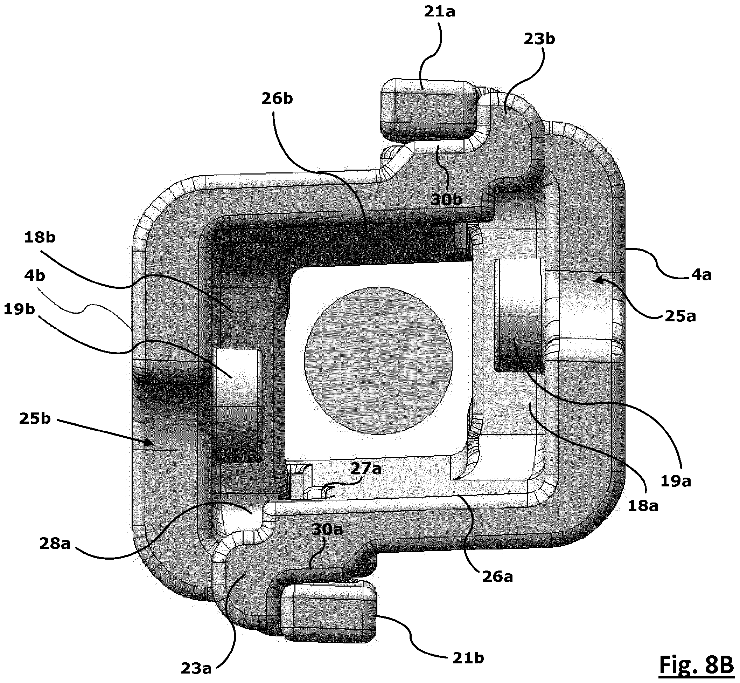

In this regard, according to a preferred embodiment, the two pins 19a and 19b are not located on the centreline of the half-shells, but are offset in the direction of the respective cut-outs, i.e. towards the edge on which the teeth with longitudinal extension 20a, 21a, 20b, 21b are provided. This means that, once the two half-shells are assembled together, the two opposed pins 19a and 19b are not aligned on the same axis, but are offset, as shown in Fig. 8A and 8B.

The inner surface of the wedging walls of the half-shells 4a and 4b defines decks 26a, 26b on which the inclined surface 13a, 13b of the wedge elements 2 slides.

Preferably, on the inner edge of the decks 26a, 26b there is a groove or recess 27a, 27b with an inner surface generally shaped along an arc of a circle with a centre on the axis of the pin 19 of the respective half-shell. These recesses 27a, 27b are configured to accommodate part of the head portion of the respective bracket 5 in the assembly step, so as to define a useful end-stop for inserting the bracket and then shifting it laterally until it engages with the pins 19, so as to facilitate the assembly step for the user.

Moreover, preferably, the end portion of the teeth with crosswise extension 23a, 23b adjacent to the back mouth portion of the half-shells, has a recess 28a, 28b. The recesses 28a, 28b define an abutment step against which the inner side surface of the brackets 5 abuts, once they are mounted in position: this prevents the brackets 5 from having excessive crosswise clearance, once inserted in position but, above all, defines a mechanical stop of the brackets, which also prevents the two half-shells from mutually separate in the assembly step (before inserting the wedge elements 2). These recesses 28a, 28b therefore also have the purpose of allowing the engagement and release between the two half-shells 4a and 4b only when the brackets 5 are rotated around the axis of the pivot pins 19 so as to move away from the axis of the conductor.

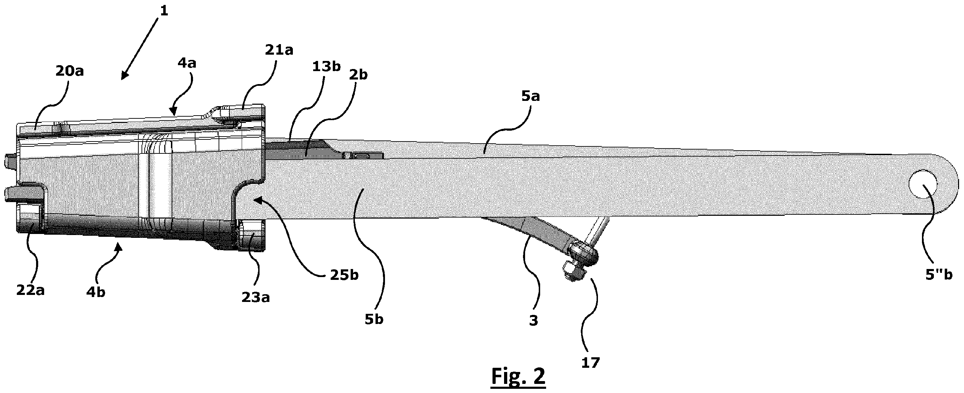

The brackets 5a, 5b - as can be clearly seen in Figs. 1 and 2 - are preferably obtained from an elongated flat plate with rounded heads, of appropriate width and thickness for a suitable arrangement inside the recesses 18a, 18b of the half-shells 2a, 2b.

All the elements that make up the device are preferably obtained from a metallic material, for example steel or aluminium alloy.

The following describes briefly, for greater clarity, the operation and installation of the wedge-shaped clamping device.

The installation is carried out with the wire to be clamped already laid-down.

In a first step, the two wedge-shaped elements 2a and 2b are moved closer crosswise, arranged opposite to each other, interposing the wire which rests in the seats 6a and 6b. Typically the lower wedge-shaped element 2a, provided with the tab extension 3, is placed under the wire. By applying pressure to the two elements 2a and 2b the coupling teeth 7, 8, 9 and 10 are brought together to mutually couple. Subsequently an elastic (or similar) strap is applied in the appropriate seats 29a, 29b provided on the two wedge-shaped elements 2a, 2b, so as to further hold the two wedge-shaped elements 2a, 2b on the wire during assembly operations with the other components.

In a second step, manual assembly of the half-shells 4a, 4b is performed around the conductor.

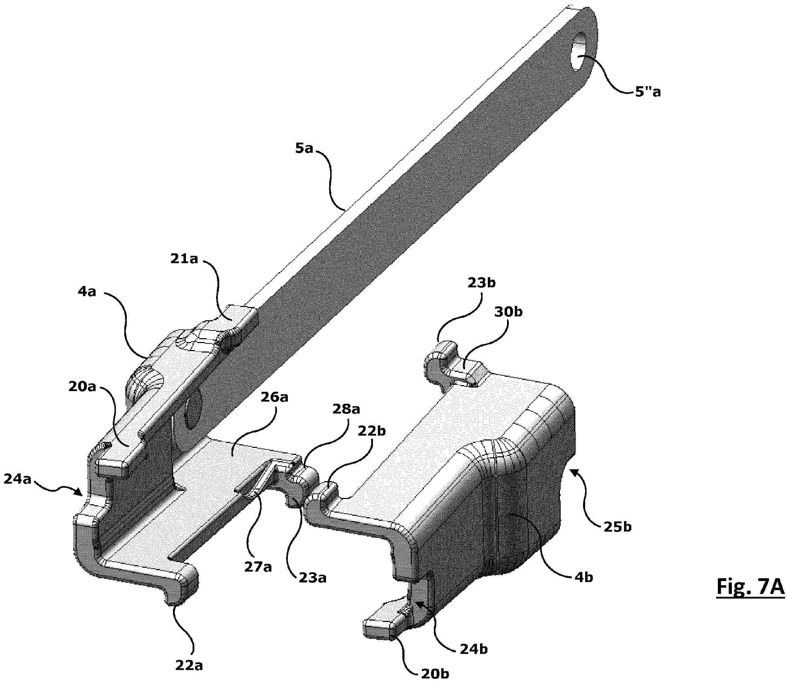

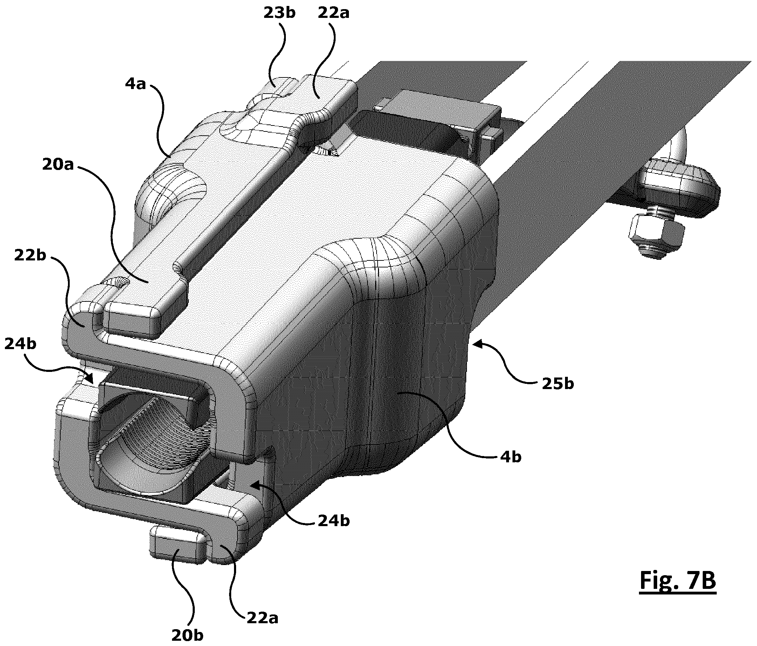

The assembly of the shell 4 takes place by performing two crosswise movements F1 and F2 (see Figs. 7A, 8A, 8B) between the two half-shells 4a and 4b, to determine the mutual fit of the complementary teeth, i.e. the longitudinal extension teeth of a half-shell with the crosswise extension teeth of the other half-shell and vice versa, respectively forming the pairs 21a-23b, 20a-22b, 22a-20b and 21b-23a.

Engagement occurs first with the juxtaposition of the two half-shells 4a and 4b in the direction F1 orthogonal to the side walls, introducing the respective teeth with crosswise extension 22a, 23a of a half-shell 2a in the cut-outs 24b, 25b of the complementary half-shell 2b and vice versa. Then, the second movement F2 is orthogonal to the first, hence an close movement according to a direction orthogonal to the wedging walls, which engages the teeth with crosswise extension with the teeth having a longitudinal extension, until forming the tight engagement visible in Fig. 8B.

In a third step, the brackets 5a and 5b are connected to the respective internal pins 19a and 19b of the two half-shells 4a and 4b.

In general, each bracket 5a, 5b is introduced inside the shell 4, abutting into the respective recess 27b, 27a with an entry inclination - downwards and upwards respectively - defined by the shape of the said recess. In particular, each bracket 5a, 5b is introduced parallel to the longitudinal plane of the wall of the half-shell, it is made to slide on the bottom of the guide recess 27b, 27a and then displaced transversely on a side, until introducing the respective hole 5'a, 5'b on the respective pin 19a, 19b. At this point, the bracket 5a, 5b is rotated to bring it closer to the longitudinal axis of the device, thus going to fit between the side wall of the half-shell 4a, 4b and the abutment step 28b, 28a.

In a fourth step, the shell body 4 to which the brackets 5a, 5b are connected, is made to slide back, so as to introduce the wedge-shaped element 2 more deeply into the shell 4, and bring the tapered surfaces of the wedge-shaped elements 2a and 2b in sliding abutment on the inner surfaces of the wedging walls: in this sliding movement the desired wedging of the wedge-shaped elements 2a and 2b is determined, which therefore will tighten strongly on the wire.

The two low-friction coatings 13a and 13b facilitate the insertion of the wedge-shaped unit 2 in the cavity of the shell body 4. The latter therefore determines a tightening force on the wire which progressively increases as the wedge-shaped unit 2 is inserted into the shell body 4 due to the tension of the wire. At the same time, the reaction of the wedge-shaped unit 2 on the shell body 4 causes a force to remove the two half-shells 4a and 4b which further tightens the mutual engagement of the fastening teeth, which makes it impossible to accidentally re-open the shell body.

In a fifth step, by means of a suitable joint applied to the openings 5"a, 5"b of the brackets 5a, 5b, the clamp device is fixed to the anchor tower. The tension exerted by the wire, which is transferred to the wedge-shaped unit 2 by means of the high friction surfaces of the seats 6a and 6b, causes the wedge effect to further consolidate the clamp device.

As can be well understood from the above description, the devised system allows to fully achieve the purposes stated at beginning.

All the elements of the device require a simple production and the two half-shells do not require further machining. In addition, the fact that wedge elements, brackets and half-shells are identical, makes it possible to reduce the number of different components.

The presence of pivot pins inside the half-shells avoids having to set up additional elements for constraining the brackets, which thus remain well locked in position (without the possibility of accidental release) and protected with the assembly of the half-shells only. The inner pins obtained integrally with the half-shells, for example by forging, in comparison to the pins fit in eyelets, in addition to a lower production cost, do not introduce a structural weakening on the external bodies, and guarantee higher electric performances. Furthermore, the inner constraint system of the brackets avoids damage due to infiltration or impact with external objects to a greater extent, thus offering significant protection to the connection between the power line and the tower.

The configuration of the coupling teeth on the wedge-shaped unit 2 is simple, effective and of minimum encumbrance.

Finally, the specific arrangement of the half-shells 4a and 4b, with the engaging teeth with longitudinal and crosswise extension and the cut-outs at the front and back mouths, allow an assembly with two crosswise coupling movements, which are intuitive and easy to carry out during implementation.

It is understood, however, that the invention should not be considered limited to the particular arrangement illustrated above, which constitutes an exemplary embodiment, but that different variations are possible, all within the reach of a person skilled in the art, without departing from the scope of protection of the invention itself, which is only defined by the following claims.

It is also understood that the device of the invention could also have other applications, in which it is not necessary to constrain an electric wire but any other wire or strand.

## Claims

1. Wedge-shaped clamping device for anchoring a wire, comprising
a wedge-shaped unit (2) provided with two wedge-shaped tapered elements (2a, 2b) mutually coupled and provided with opposite seats (6a, 6b),
a shell body (4) provided with inner wedging surfaces and configured to house said wedge-shaped unit (2), and
a pair of constraining brackets (5a, 5b) coupled with pivot pins (19a, 19b) fixed to and inside said shell body (4),
wherein said shell body (4) is comprised of two mutually coupled half-shells (4a, 4b), **characterised in that**
said half-shells (4a, 4b) have an inner recess (18a, 18b), which extends on a side wall up to an edge which defines a back mouth, from which said pivot pin (19a, 19b) projects perpendicularly, said pin being integrally formed with said half-shells (4a, 4b), and **in that**
said constraining brackets (5a, 5b) have a flat portion provided with a coupling hole (5'a, 5'b) engaged with said pivot pins (19a, 19b), of a thickness equal to or smaller than a depth of said inner recess (18a, 18b).

2. Clamping device as in claim 1, wherein said half-shells (4a, 4b) have mutual engaging teeth (20a, 21a, 22a, 23a, 20b, 21b, 22b, 23b) which engage by means of two mutually orthogonal crosswise coupling movements (F1, F2).

3. Clamping device as in claim 1 or 2, wherein said half-shells (4a, 4b) have said side wall and a wedging wall mutually orthogonal, from one of said walls a pair of engaging teeth with longitudinal extension (20a, 20b, 21a, 21b) are projecting and from the other of said walls a pair of engaging teeth with crosswise extension (22a, 22b, 23a, 23b) are projecting.

4. Clamping device as in claim 3, wherein said half-shells (4a, 4b) furthermore have cut-outs (24a, 25a, 24b, 25b) in said side wall, which extend as far as a front and a back mouth, respectively, adjacent to said engaging teeth with longitudinal extension (20a, 20b, 21a, 21b).

5. Clamping device as in claim 3 or 4, wherein said engaging teeth with crosswise extension (22a, 22b, 23a, 23b) project both into the same direction and said engaging teeth with longitudinal extension (20a, 20b, 21a, 21b) project into mutually opposite directions.

6. Clamping device as in any one of the preceding claims, wherein said half-shells (4a, 4b) are identical.

7. Clamping device as in any one of the preceding claims, wherein on a wall of said half-shells (4a, 4b) parallel to the axis of said pivot pins (19a, 19b) a second recess (27a, 27b) is arranged with a bottom surface having a circle arc shape with centre in the axis of said pivot pins (19a, 19b).

8. Clamping device as in any one of the preceding claims, wherein said wedge-shaped elements (2a, 2b) have a pair of crosswise coupling teeth (8-11) in the proximity of a back portion thereof.

9. Clamping device as in claim 8, wherein on each wedge-shaped element (2a, 2b) the two coupling teeth (8-11) are in the shape of a wedge, with tapering towards the other wedge-shaped element (2b, 2a), mutually longitudinally offset with the same pitch.

10. Clamping device as in claim 8 or 9, wherein each wedge-shaped element (2a, 2b) has, in the proximity of said coupling teeth (8-11) a circumferential groove (29) for the insertion of a temporary retaining strap.

11. Clamping device as in any one of the preceding claims, wherein a portion (23a, 23b) of said half-shells adjacent to the back mouth area thereof has a recess (28a, 28b) which defines an abutment step against which an inner side surface of said brackets (5) abuts when said holes (5'a, 5'b) are coupled with said pivot pins (19a, 19b).
